# FASCICULE DE BREVET EUROPEEN

(11) **EP 2 647 462 B1**
(45) Date de publication et mention de la délivrance du brevet: **31.05.2017**
(21) Numéro de dépôt: 13001758.5
(22) Date de dépôt: 05.04.2013
(51) Int. Cl.: B23K 11/30, B23P 19/02, B23Q 3/155, B25B 27/02

(54) **Changeur d'électrodes avec des moyens d'entraînement de patins en translation**
Elektrodenwechsler mit translatorischem Antrieb von Greiffern
Electrode changer with translation driving means for grips

(30) Priorité: 06.04.2012 FR 1201025
(43) Date de publication de la demande: 09.10.2013
(73) Titulaire: EXROD, 78570 Chanteloup-les-Vignes (FR)
(72) Inventeur: Lemaitre, Jean-Claude, 59111 Hordain (FR)
(74) Mandataire: Thibon-Littaye, Annick

(56) Documents cités:
- DE-A1-102004 008 038
- DE-B3-102009 058 937
- DE-C1- 3 822 655
- DE-U1-202012 000 498
- FR-A1- 2 802 455
- JP-A- 57 066 834

## Description

La présente invention concerne un changeur d'électrodes de soudage conformément au préambule de la revendication 1 (voir, par exemple, DE3822655).

Dans l'industrie, on utilise des robots de soudage pour réaliser à grande cadence des points de soudure sur des tôles minces qu'il faut solidariser entre elles. Notamment, on utilise de tels robots de soudage pour réaliser les soudures des carrosseries dans l'industrie automobile. Ces robots comportent classiquement à une extrémité une pince de soudage qui est formée de deux bras articulés munis chacun d'une électrode. Le robot est commandé d'une part pour déplacer la pince et ses électrodes dans la zone de soudage et d'autre part pour faire pivoter un bras de la pince par rapport à l'autre afin de venir pincer les tôles à souder et pour relâcher la prise lorsque la soudure est réalisée.

Un point de soudure est ainsi obtenu en serrant deux tôles minces entre l'électrode supérieure et l'électrode inférieure de la pince de soudage et en faisant passer entre ces électrodes un courant de forte intensité sous une faible tension. Une fusion intervient à l'interface des deux tôles et un point de soudure se forme après refroidissement. A chaque point de soudure réalisé, les électrodes s'érodent et il est nécessaire de procéder régulièrement à un rodage des électrodes pour remettre en état la face active de l'électrode amenée à entrer en contact avec la tôle. Lorsqu'il ne reste plus suffisamment de matière sur les électrodes pour réaliser un nouveau rodage ou lorsque les bouts d'électrodes sont par trop déformés, il s'agit alors de remplacer les électrodes usagées de la pince à souder par des électrodes neuves.

A cet effet, on amène la pince de soudage en regard d'un dispositif d'extraction pour retirer les électrodes usagées et on amène la pince de soudage en regard d'un dispositif de chargement pour disposer des électrodes neuves sur les bras de la pince de soudage. Pendant ces opérations, la pince reste en général portée par le robot de soudage. Le dispositif d'extraction et le dispositif de chargement sont les postes clés de ce que l'on appelle couramment un changeur d'électrodes.

Le document DE3822655 divulgue un dispositif d'extraction d'électrodes usagées dans lequel les électrodes à changer sont immobilisés par des mâchoires qui viennent se refermer sur l'électrode. Les mâchoires sont ensuite activés pour bouger en translation dans des directions opposées pour faire tourner l'électrode par rapport au bras de la pince qui reste fixe. Le document décrit l'imposante tringlerie nécessaire pour piloter le mouvement de ces mâchoires, aussi bien en rotation pour venir emprisonner l'électrode, qu'en translation pour faire tourner l'électrode par rapport au bras.

L'invention propose un changeur d'électrodes tel que défini dans la revendication 1, dans lequel le poste d'extraction comporte des moyens d'extraction particulièrement simples et commodes à mettre en place et à utiliser. Elle implique deux patins qui sont mobiles en translation selon des directions parallèles et des sens contraires de manière à, dans un premier temps, saisir entre eux l'électrode à extraire puis, dans un deuxième temps, entraîner en rotation l'électrode (qui est disposée entre ces deux patins) par rapport au bras de pince qui la supporte. Il en résulte que l'électrode, qui était préalablement montée à force par rapport au bras, s'en dégage par dégrippage sous l'effet de cette rotation, ce qui permet son évacuation, avantageusement par simple gravité.

Les moyens de l'invention assurent, par une transformation d'un mouvement de translation des patins en un mouvement de rotation des électrodes en prise, une extraction des électrodes performante, notamment en ce qu'elle est très efficace en dégagement de l'électrode tout en étant peu contraignante pour les bras de pince. Selon l'invention, les électrodes à extraire sont saisies par les patins puis forcées à rotation par un mouvement continu de translation des patins dans leur propre plan. Ceci permet que les patins soient montés de manière à se déplacer seulement, en translation, sans avoir besoin de basculer l'un par rapport à l'autre. Et ceci permet de simplifier grandement la commande et les moyens associés pour mettre en oeuvre le déplacement des patins.

Le dispositif changeur d'électrode suivant l'invention comporte avantageusement des moyens d'entraînement des patins en déplacement linéaire respectivement dans deux sens opposés, ainsi que des moyens pour commander automatiquement leur fonctionnement en synchronisation avec les autres opérations effectuées sur la pince et les électrodes.

Dans le poste d'extraction selon l'invention, deux patins d'extraction sont portés par des barres de crémaillère respectives parallèles qui sont entraînées et guidées simultanément en translation axiale, l'une dans un premier sens et l'autre dans le sens opposé. De la sorte, le déplacement en sens opposés des patins force en rotation l'électrode par rapport au bras de la pince.

Selon une caractéristique de l'invention, les patins présentent un chanfrein d'introduction qui prolonge verticalement la surface de contact avec l'électrode. La disposition particulière de ces chanfreins, sur le côté du patin qui va attaquer l'électrode pour la saisir, facilite la double fonction de saisie puis d'accrochage par la surface de contact de l'électrode dans un mouvement continu de translation, les barres ou arbres portant les patins qui sont situés de part et d'autre de l'emplacement dans lequel la pince à souder place l'électrode à extraire.

Suivant des modes de réalisation préférés dans la pratique industrielle, l'invention répond aux caractéristiques suivantes, mises en oeuvre séparément ou en chacune de leurs combinaisons techniquement opérantes.

Les crémaillères sont entraînées en translation par la rotation d'un pignon en bout d'un arbre motorisé. Le pignon est situé entre les deux barres de crémaillère, dans le plan contenant les axes de ces crémaillères et ce pignon présente une denture adaptée à coopérer avec les dents de chacune des crémaillères. De la sorte, la rotation du pignon entraîne simultanément les deux crémaillères en sens opposé.

Le poste d'extraction comporte un boîtier, dans lequel sont logés le pignon et les crémaillères, et qui comporte une paroi avant muni d'alésages à travers lesquels passent les arbres de telle sorte que les patins s'étendent hors du boîtier. Les arbres sont translatés par l'entraînement du pignon, entre une position d'extrémité escamotée et une position d'extrémité déployée, et ils sont décalés longitudinalement l'un par rapport à l'autre de telle sorte que lorsqu'un arbre principal est dans sa position d'extrémité déployée, l'arbre complémentaire est dans sa position d'extrémité escamotée et inversement. On définit ainsi entre les patins, lorsque les arbres sont chacun dans une position d'extrémité, une position d'extraction pour insérer l'électrode à extraire.

Le boîtier peut comporter en outre une paroi arrière munie également d'alésages à travers lesquels passent également les arbres qui traversent le boîtier de telle sorte que les patins s'étendent hors du boîtier et que des moyens de contrôle du déplacement des arbres s'étendent hors du boîtier à l'opposé des patins, les crémaillères et pignon restant par ailleurs logés à l'intérieur du boîtier.

Chaque patin présente une surface de contact à friction avec l'électrode qui est orientée vers le patin en regard et cette surface de contact comporte une série de picots qui permettent d'assurer l'entraînement en rotation de l'électrode à extraire par rapport au bras de pince, en augmentant le coefficient de friction, de telle sorte que l'on assure le dégrippage de cette électrode. Des propriétés agrippantes de la surface de contact avec l'électrode sont avantageusement apportées par des picots disposés alignés en biais par rapport à l'axe de déplacement des patins. Ainsi, on assure un dégagement axial de l'électrode par rapport au bras de pince qui est combiné au dégrippage de l'électrode. Le désengagement de l'électrode hors du bras de pince en est dès lors facilité.

Des moyens de détection de présence sont de préférence prévus, aussi bien pour vérifier la présence de l'électrode à l'arrivée du bras dans le poste d'extraction que pour vérifier l'extraction effective de l'électrode usagée. Un tel contrôle de la bonne éjection de l'électrode est particulièrement intéressant, notamment en ce qu'il peut permettre de reporter le changement d'une électrode inférieure ou supérieure si l'électrode supérieure ou inférieure correspondante n'a pas été correctement éjectée.

Dans un mode de réalisation, les mêmes moyens d'extraction peuvent recevoir indifféremment une électrode supérieure arrivant par le dessus du dispositif et une électrode inférieure arrivant par dessous le dispositif. Dans ces deux cas, les patins se déplacent en translation de la même manière quelle que soit l'électrode à extraire. L'extraction successive des électrodes inférieure et supérieure est réalisée avec des moyens de préhension et d'extraction de l'électrode qui sont uniques.

Dans un mode de réalisation distinct, on peut prévoir deux postes d'extraction situés l'un au-dessus de l'autre, avec le poste d'extraction supérieur qui reçoit exclusivement des électrodes supérieures et avec le poste d'extraction inférieur qui reçoit exclusivement des électrodes inférieures. On autorise ainsi une extraction simultanée des deux électrodes d'un même bras de soudage.

L'invention vise également un poste de chargement des électrodes dans lequel un chargeur d'électrodes neuves vient en association, dans un changeur d'électrodes complet suivant l'invention, avec le poste d'extraction dont la constitution a été explicitée ci-dessus. Ce chargeur peut être formé par exemple d'une rampe de distribution linéaire ou un carrousel à distribution rotative. Selon différentes caractéristiques, on peut disposer dans un chargeur unique une électrode supérieure au droit d'une électrode inférieure ou encore disposer la série d'électrodes supérieures dans un premier chargeur et la série d'électrodes inférieures neuves dans un deuxième chargeur. Les bras de la pince de soudage sont serrés l'un contre l'autre pour réaliser selon les cas un chargement simultané des deux électrodes neuves ou un chargement successif d'une électrode supérieure puis d'une électrode inférieure.

Par ses caractéristiques, telles qu'elles ont été ci-avant ou qu'elles seront plus loin définies, décrites et illustrées, et telles qu'elles peuvent être avantageusement appliquées dans la pratique industrielle, l'invention permet notamment d'obtenir un dispositif d'extraction compact dont la simplicité structurelle permet un fonctionnement fiable. La conception du dispositif permet en outre de réaliser facilement le changement des patins d'extraction sans démonter tout le poste d'extraction. Dans le cas où les mêmes moyens d'extraction servent à extraire l'électrode inférieure et l'électrode supérieure pour chaque pince, on réalise un dispositif encore moins onéreux puisque les coûts de fabrication et d'entretien ne s'appliquent qu'à un mécanisme commun aux deux types d'électrodes. Dans son ensemble, le changeur d'électrodes offre un fonctionnement sécurisé du fait des faibles déplacements des pinces de soudage nécessaires pour passer d'un poste à l'autre lors du cycle de remplacement des électrodes.

L'invention sera maintenant plus complètement décrite dans le cadre de caractéristiques préférées et de leurs avantages, en faisant référence aux figures des dessins annexés qui les illustrent et dans lesquelles :
- la figure 1 représente une vue d'ensemble d'une installation industrielle comportant un robot de soudage piloté par commande numérique et un changeur d'électrodes vers lequel est déplacé le robot lorsque les électrodes doivent être changées ;
- la figure 2 représente une vue d'ensemble d'un changeur d'électrodes selon l'invention, avec un poste d'extraction ainsi qu'un poste de chargement distinct du poste de chargement visible sur la figure 1 ;
- la figure 3 est une vue en perspective du poste d'extraction selon un premier mode de réalisation, avec le capot supérieur retiré ;
- la figure 4 est une vue en perspective du poste d'extraction selon un deuxième mode de réalisation, avec le capot supérieur retiré ;
- les figures 5 et 6 sont des schémas du principe de fonctionnement du dispositif d'extraction, avec la figure 5 qui montre un bras de robot de soudage portant une électrode en prise entre les patins d'extraction et la figure 6 qui montre cette électrode dégrippée après la translation des patins ;
- les figures 7 et 8 sont des vues de détail de deux réalisations de patins et de la disposition particulière des picots qui sont disposés sur une face de ces patins ;
- les figures 9 et 10 sont des vues illustrant la position en prise d'une électrode associée à un bras inférieur (figure 9) et d'une électrode associée à un bras supérieur (figure 10) par rapport aux patins d'extraction, avec des picots représentés axialement.

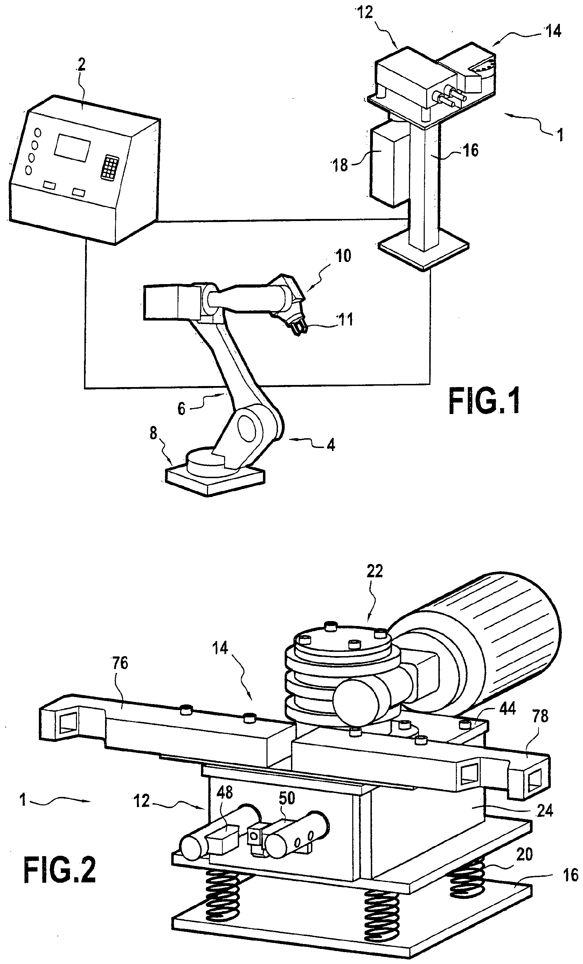

Un changeur d'électrodes 1 est illustré sur la figure 1. Un système de commande numérique 2 est relié à un robot de soudage 4 ainsi qu'à un dispositif changeur d'électrodes selon l'invention. Le changeur d'électrodes 1 est disposé à proximité du robot de soudage de sorte que le déplacement commandé du robot puisse amener celui-ci en regard du changeur d'électrodes.

Le robot comporte de façon connue un corps articulé 6 qui est monté sur une base 8 et à une extrémité duquel une pince 10 assure le soudage. La pince comporte deux bras 11 disposés en mâchoires en bout desquels sont emmanchés des électrodes 13. Pour réaliser le soudage de deux tôles par exemple, on serre les pinces l'une sur l'autre pour amener les électrodes en contact de la tôle. L'ouverture et la fermeture des bras de pince, de même que l'articulation du corps ou le déplacement du corps par rapport à la base, sont commandés numériquement.

Lorsque les électrodes d'une pince de soudage doivent être définitivement changées, la pince de soudage est amenée en regard du changeur d'électrodes, et les électrodes sont extraites puis remplacées, selon un fonctionnement qui sera décrit plus loin.

Tel que cela est illustré sur la figure 2, le changeur d'électrodes comporte un poste d'extraction 12 des électrodes usagées hors des bras de pince et un poste de chargement d'électrodes 14 pour associer à ces bras deux électrodes neuves. Ces deux postes sont disposés au plus près pour que les temps de transition d'un cycle de changement d'électrodes soient limités le plus possible. Un bâti 16 du changeur d'électrode permet de porter les deux postes et de les disposer à proximité. Un coffret électrique 18 est fixé au bâti, ce coffret renfermant les moyens électriques nécessaires à la réception des informations provenant de la commande numérique et à la transmission par la suite de commandes de déplacements correspondants des moyens associés aux deux postes d'extraction et de chargement.

Tel que cela est particulièrement visible sur la figure 2, le poste d'extraction est monté sur ce bâti par l'intermédiaire de ressorts de compression 20 destinés à accompagner de façon flexible les déplacements dus aux efforts qui vont être produits lors de l'extraction des électrodes. A l'opposé, le poste d'extraction est relié à un ensemble moto-réducteur 22.

Le poste d'extraction comporte un boîtier 24 à l'intérieur duquel sont adaptés à coulisser deux arbres parallèles 26, 28, une extrémité de chacun de ces arbres formant une crémaillère 30, 32 complémentaire d'un pignon d'entraînement 34.

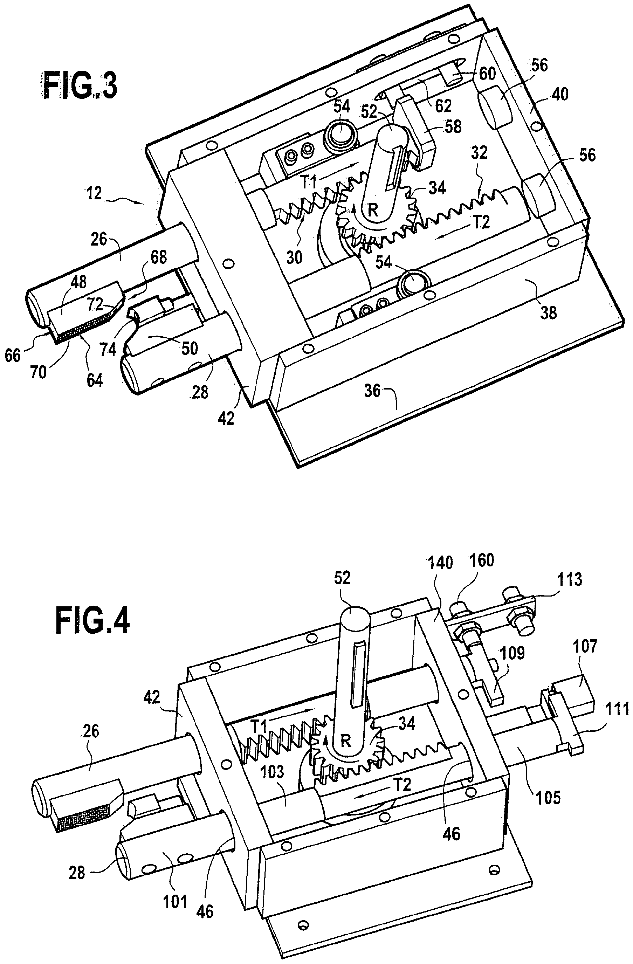

Dans un premier mode réalisation, illustré à la figure 3, le boîtier comporte un fond 36 porté par les ressorts de compression, des parois latérales 38 et une paroi arrière 40 fixes ainsi qu'une paroi avant 42 et un couvercle supérieur 44 (non représenté sur la figure 3 et visible sur la figure 2) amovibles. La paroi avant amovible comporte deux alésages 46 pour laisser chacun passage à un des deux arbres parallèles, qui s'étendent en partie dans le boîtier et en partie en dehors du boîtier. Par la suite, on appellera partie interne, et partie externe de l'arbre respectivement, la partie de l'arbre qui s'étend à l'intérieur du boîtier et la partie de l'arbre qui s'étend à l'extérieur du boîtier, et on appellera l'extrémité interne et l'extrémité externe de l'arbre respectivement les extrémités de l'arbre qui sont situées à l'intérieur et à l'extérieur du boîtier.

Pour chaque arbre 26, 28, la partie interne comporte une crémaillère dont les dents sont tournées vers l'arbre parallèle tandis que la partie externe porte un patin d'extraction 48, 50 qui s'étend en saillie radiale de l'arbre, en direction de l'arbre parallèle.

Le pignon d'entraînement 34 s'étend entre les deux arbres, en étant en prise aussi bien avec la crémaillère de l'un qu'avec la crémaillère de l'autre. On comprend dès lors, tel que cela sera décrit plus longuement plus loin, que la rotation du pignon d'entraînement entraîne le déplacement en translation de chacune des crémaillères, dans des sens opposés puisque les arbres sont diamétralement opposés par rapport au pignon. Le pignon est en butée contre une bague d'entretoise fixée sur le fond du boîtier (et non visible sur la figure 3) et il est porté en bout d'un arbre d'entraînement 52 traversant le couvercle du boîtier pour être entraîné en rotation par l'ensemble moto-réducteur 22.

Le déplacement en translation des crémaillères et des arbres associés est donc assuré par la rotation du pignon d'entraînement. Les arbres en translation sont guidés par des galets de roulement 54 disposés du côté opposé de l'arbre par rapport au pignon et par les alésages dans la paroi avant du boîtier. On peut prévoir des bagues de guidage des arbres, ces bagues étant solidaires de cette paroi rendue amovible dans le cas particulier décrit.

Chaque arbre est susceptible de se déplacer axialement, en translation sur lui-même, entre deux positions d'extrémité. Une position d'extrémité escamotée correspond à la position dans laquelle l'arbre est principalement à l'intérieur du boîtier, avec seule la partie de l'arbre portant le patin qui est à l'extérieur du boîtier. Dans cette position d'extrémité escamotée, l'extrémité interne de l'arbre est au contact d'une butée de sécurité 56 disposée sur la paroi arrière fixe. L'autre position d'extrémité, dite déployée, correspond à la position dans laquelle l'arbre est le plus éloigné de la butée de sécurité. Dans chacune de ces positions d'extrémités, le pignon d'entraînement reste en prise avec les dents de la crémaillère. On peut prévoir avantageusement une ou deux dents supplémentaires sur la crémaillère pour s'assurer que le pignon d'entraînement est toujours en prise.

On peut ici différencier les deux arbres parallèles en ce qu'un des deux arbres, dit arbre principal 26, porte à son extrémité interne une bague d'indexage 58, tandis que l'autre arbre, dit arbre complémentaire 28, n'en porte pas.

La disposition du pignon d'entraînement et des arbres est telle que lorsque l'arbre principal 26 est dans sa position d'extrémité déployée, l'arbre complémentaire .28 est dans sa position d'extrémité escamotée (visible sur la figure 3) et qu'inversement, lorsque l'arbre principal est dans sa position d'extrémité escamotée, l'arbre complémentaire est dans sa position d'extrémité déployée. Le déplacement en translation des arbres est limité par la présence sur la paroi arrière des butées de fin de course 56, ce qui a pour conséquence, lorsqu'un des arbres arrive dans sa position d'extrémité escamotée au contact de ces butées, de bloquer la translation dans le sens opposé de l'autre arbre par le blocage du mécanisme pignon crémaillère.

Deux détecteurs inductifs de contrôle de position 60 sont logés dans une lumière 62 de la paroi latérale proche de l'arbre principal. Ces détecteurs relèvent le passage devant eux de la bague d'indexage disposée à l'extrémité interne de l'arbre principal. Lorsque l'arbre principal est dans la position d'extrémité escamotée, la bague d'indexage est placée devant le premier détecteur le plus proche de la paroi du fond, tandis que lorsque cette bague d'indexage est placée devant le deuxième détecteur, l'arbre principal est dans la position d'extrémité déployée. Il en résulte que l'on peut déterminer la position de l'arbre principal et par extension la position de l'arbre complémentaire.

Un deuxième mode de réalisation est illustré à la figure 4, et il diffère du mode de réalisation illustré figure 3 principalement en ce que les arbres parallèles 26, 28 sont prolongées de manière à traverser la paroi arrière 140 du boîtier et en ce que les deux extrémités d'un même arbre sont situées à l'extérieur du boîtier, de part et d'autre de ce boîtier.

Le boîtier diffère en ce que la paroi arrière 140 est rendue amovible, semblablement à la paroi avant 42. Ces deux parois amovibles comportent chacune deux alésages 46 pour laisser passage aux arbres parallèles, qui s'étendent en partie dans le boîtier ainsi que de part et d'autre du boîtier. Par la suite, on distinguera les parties successives d'une extrémité à l'autre d'un arbre, à savoir la partie avant 101 qui porte le patin d'extraction, la partie centrale 103 qui comporte la crémaillère dont les dents sont tournées vers l'arbre parallèle, et la partie arrière 105 qui porte des moyens de contrôle de déplacement des arbres.

Conformément au premier mode de réalisation, un pignon d'entraînement 34, porté en bout d'un arbre d'entraînement 52, s'étend entre les deux arbres, en étant en prise aussi bien avec la crémaillère de l'un qu'avec la crémaillère de l'autre et la rotation de ce pignon d'entraînement entraîne le déplacement en translation de chacune des crémaillères, dans des sens opposés puisque les arbres sont là aussi diamétralement opposés par rapport au pignon.

Les arbres en translation sont guidés par les alésages disposés cette fois dans les deux parois amovibles opposées. On évite ainsi avantageusement que les arbres soient en porte à faux par rapport à la seule paroi avant. De la sorte, on génère moins de contraintes sur les dentures du pignon et des crémaillères.

Comme précédemment, la disposition du pignon d'entraînement et des arbres est telle que lorsque l'un des arbres est dans sa position d'extrémité déployée, l'autre arbre est dans sa position d'extrémité escamotée (visible sur la figure 4) et inversement. On comprend qu'ici dans la position d'extrémité déployée d'un arbre, la partie avant de l'arbre est éloignée de la paroi avant du boîtier tandis que la partie arrière de ce même arbre est rapprochée de la paroi arrière du boîtier, et que c'est l'inverse pour la position d'extrémité escamotée.

Les moyens de contrôle de déplacement comportent différents capteurs de détection de course. Notamment, on contrôle le déplacement en translation des arbres dans le sens de l'éloignement de la paroi arrière par la présence d'un capteur de détection 107 rapporté sur le boîtier. Le capteur de détection remplace les moyens de butée mécaniques du premier mode de réalisation dans le même but de contrôler simultanément la translation dans un sens d'un premier arbre et la translation dans le sens opposé de l'autre arbre. Le capteur est placé sous le plan défini par les axes de déplacement des arbres, entre ces arbres, et il est adapté à détecter le passage devant lui de l'une ou l'autre des bagues d'indexage 109 et 111 associés à la partie arrière de chacun des arbres. A cet effet, chaque bague d'indexage présente une forme en saillie qui s'étend en direction de l'autre arbre. On comprend que la dimension transversale de cette bague est inférieure à la moitié de l'entraxe de manière à ce que les bagues ne se heurtent pas et qu'elles ne gênent pas le déplacement axial des arbres.

Deux détecteurs inductifs de contrôle de position 160 sont disposés sur une barrette 113 rendue solidaire d'une paroi latérale du boîtier et qui s'étend en saillie du boîtier dans le prolongement axial de cette paroi. Là aussi, on peut différencier les deux arbres parallèles de telle sorte que l'arbre principal longe les détecteurs inductifs de contrôle de position tandis que l'arbre complémentaire s'étend à l'opposé.

Les détecteurs relèvent le passage devant eux de la bague d'indexage 109 disposée au niveau de la partie arrière de l'arbre principal, dans un fonctionnement similaire à celui du premier mode de réalisation. Ici toutefois, les détecteurs et la bague d'indexage sont disposés à l'extérieur du boîtier de sorte que l'on simplifie les opérations d'entretien. On comprendra qu'il est prévu dans ce mode de réalisation un carter non représenté pour protéger ces moyens de détection.

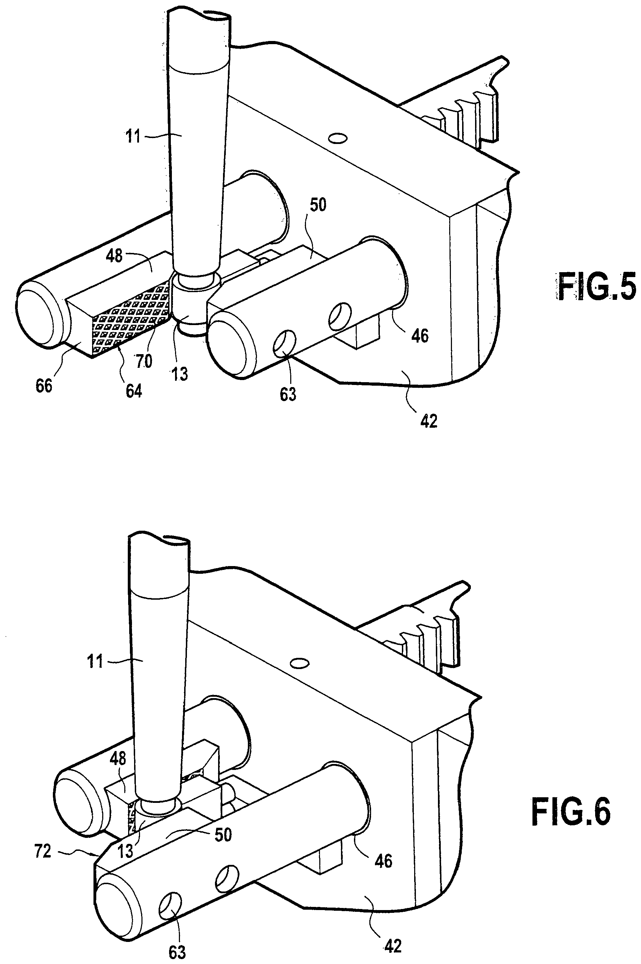

Dans les deux modes de réalisation décrits, un patin est monté à une extrémité de chacun des arbres, et plus précisément à l'extrémité externe dans le premier mode de réalisation et à l'extrémité avant dans le deuxième mode de réalisation. Comme cela est visible sur les figures 5 et 6 par exemple, le patin est monté rigidement par vissage sur l'arbre. Il en résulte qu'après usages, lorsque le patin est abîmé et nécessite un remplacement, il est facile pour l'opérateur de dévisser les moyens de fixation 63 du patin et de solidariser à l'arbre un patin neuf, sans pour cela démonter le reste du poste d'extraction. Les patins 48, 50 présentent sensiblement une forme de parallélépipède avec une surface de contact verticale 64 qui est opposée à la face de fixation du patin sur l'arbre et qui est donc disposée en regard de l'autre patin et du bras correspondant. Chaque patin présente une face avant 66 et une face arrière 68 formant des surfaces d'extrémités du patin qui sont disposées sensiblement perpendiculairement à la direction de déplacement des arbres.

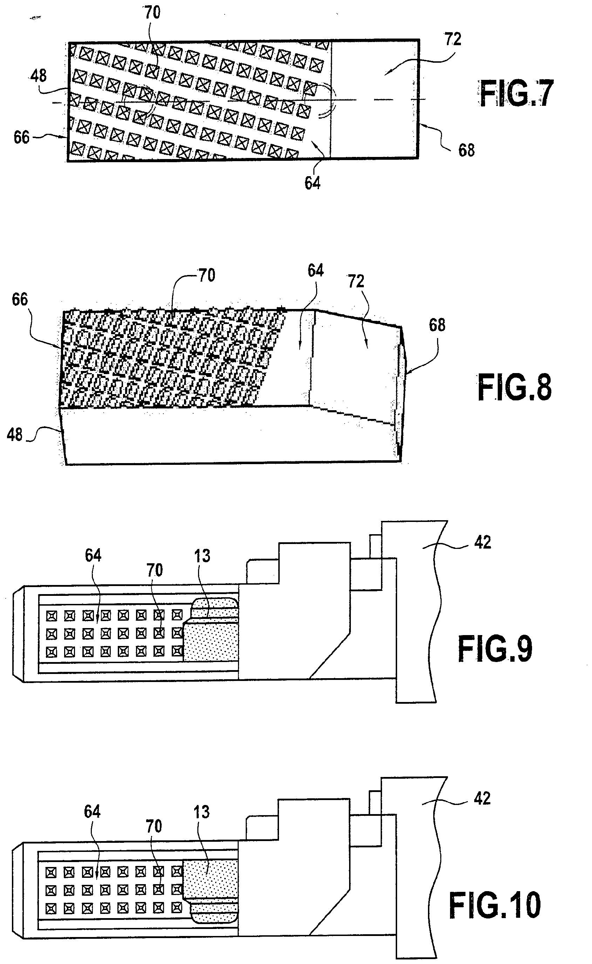

La surface de contact de chaque patin présente des séries de picots 70 qui permettent l'entraînement en rotation de l'électrode à extraire sans phénomène de glissement entre les patins et cette électrode. Les picots peuvent être à section carrée et présenter une surface d'extrémité plate, comme cela est visible sur les figures 5 et 6, ou bien présenter une arête ou un sommet pointu comme cela est visible dans les formes présentées en variante sur les figures 7 et 8. On comprendra que la forme importe peu dès lors que ces picots permettent d'éviter le glissement entre l'électrode et les patins. Par contre, plutôt que de disposer ces picots dans n'importe quel ordonnancement (et par exemple un alignement axial parallèle à l'axe de déplacement des arbres comme c'est le cas sur les figures 9 et 10), on peut choisir de disposer les picots en biais. Comme illustré sur les figures 3 à 8, les picots sont alors avantageusement arrangés les uns après les autres, alignés par séries en biais par rapport à l'axe de déplacement des arbres. Avantageusement, on forme un angle d'environ 15 degrés entre l'axe d'une série de picot et l'axe de déplacement des arbres.

Le fait que les séries de picots soient disposées en biais permet de créer lors de l'entraînement de l'électrode un mouvement linéaire combiné à son mouvement rotatif, le mouvement linéaire étant un déplacement axial de l'électrode en prise allant dans le sens de son éloignement par rapport au bras.

Aussi bien dans le premier mode de réalisation que dans le second, chaque patin présente un chanfrein d'introduction 72 entre la surface de contact et l'une des surfaces d'extrémité. Les patins sont montés sur les arbres de telle sorte que la surface chanfreinée du patin monté sur l'arbre principal est réalisée entre la surface de contact et la face arrière du patin, c'est-à-dire sur l'extrémité du patin tournée vers le boîtier tandis que la surface chanfreinée du patin monté sur l'arbre complémentaire est réalisée entre la surface de contact et la face arrière du patin, c'est-à-dire sur l'extrémité du patin qui est à l'opposée du boîtier. Comme on peut le voir sur la figure 5, cela permet de définir une position d'extraction lorsque l'arbre principal est dans sa position d'extrémité déployée et que l'arbre complémentaire est dans sa position d'extrémité escamotée. Dans cette position d'extraction, l'électrode à extraire peut être insérée sans toucher les patins grâce aux deux chanfreins d'introduction qui se retrouvent sensiblement en regard. On comprendra que la translation des patins fait par la suite correspondre l'électrode avec les surfaces de contact des patins et non plus les chanfreins d'introduction, de telle sorte que l'électrode à extraire est en prise entre les patins et non plus libre. Tel que cela sera expliqué ci-après, c'est dans cette position d'extraction que l'électrode est insérée en début de cycle d'extraction et c'est sensiblement dans cette position qu'elle est évacuée lorsque le bras de la pince est retiré après les mouvements de translation des patins.

Un capteur de présence de l'électrode à extraire 74 est porté par la face extérieure de la paroi avant amovible 42. Il est disposé en regard de la position d'extraction. Tel que cela sera décrit ci-après, cette détection de la présence d'une électrode peut être utilisée pour le déclenchement de l'opération d'extraction ainsi qu'ultérieurement pour vérifier si l'électrode a bien été extraite.

Le poste de chargement 14 est disposé au plus près du poste d'extraction 12 et il comporte comme cela est visible sur la figure 2 un chargeur d'électrodes inférieures 76 et un chargeur distinct d'électrodes supérieures 78. Ces chargeurs sont disposés dans un plan horizontal, perpendiculairement à l'axe de déplacement des arbres du dispositif d'extraction. Les chargeurs sont en outre disposés de part et d'autre du dispositif d'extraction de telle sorte que les chargeurs n'entravent pas le déplacement des pinces vers le dispositif d'extraction tout en restant le plus près possible pour limiter le temps de transition entre les postes.

Chaque chargeur assure la distribution d'électrodes en série avec une rampe de support d'électrodes qui coulisse à l'intérieur du chargeur de manière à présenter régulièrement une électrode neuve au niveau d'une encoche faite dans le chargeur pour donner accès à cette électrode à un bras de la pince de soudage.

On va maintenant décrire le fonctionnement du poste d'extraction, en se référant notamment aux figures 3 à 10.

La pince de soudage est amenée à proximité du poste d'extraction par un déplacement du robot qui est piloté par une commande du système de commande numérique.

Les bras de la pince sont articulés pour positionner une électrode 13 dans la position d'extraction qui correspond à la position visible sur la figure 9 lorsqu'il s'agit d'extraire l'électrode emmanchée sur le bras inférieur de la pince de soudage et à la position visible sur la figure 10 lorsqu'il s'agit d'extraire l'électrode emmanchée sur le bras supérieur. On fait détecter par l'intermédiaire du capteur disposé sur la paroi amovible la présence de l'électrode dans cette position afin de savoir si l'on peut débuter la procédure d'extraction.

Les arbres sont dans leur position initiale représentée aux figures 3, 4 et 5, c'est-à-dire l'arbre principal en position d'extrémité déployée et l'arbre complémentaire en position d'extrémité escamotée, et l'électrode est dans la position d'extraction, c'est-à-dire entre les patins au niveau de leur chanfrein d'introduction respectif.

L'arbre d'entraînement est entraîné en rotation dans le sens des aiguilles d'une montre (flèche R visible sur les figures 3 et 4) par l'ensemble moto-réducteur de sorte que le pignon d'entraînement monté en bout de l'arbre tourne également dans ce sens de rotation. Il en résulte un déplacement en translation des arbres portant les crémaillères en prise avec le pignon.

Les arbres sont parallèles l'un par rapport à l'autre et ils sont maintenus parallèles lors de leur déplacement en translation par les moyens de guidage formés par les galets et/ou par les bagues de guidage. Lorsque le pignon d'entraînement 34 tourne dans le sens des aiguilles d'une montre, l'arbre principal 26 est entraîné en translation vers sa position d'extrémité escamotée, dans le sens de la flèche T1 visible sur les figures 3 et 4 et l'arbre complémentaire 28 est entraîné en translation vers sa position d'extrémité déployée, dans le sens de la flèche T2 visible sur les figures 3 et 4.

Tel que cela est visible sur les figures 5 et 6 qui représentent deux étapes du procédé d'extraction d'une électrode 13 supérieure, c'est-à-dire une électrode associée à un bras supérieur de la pince de soudage, les déplacements en translation en sens opposés des deux arbres permettent de venir enserrer l'électrode à extraire par la surface de contact munie de picots de chaque patin. Cette électrode a pu être insérée entre les arbres par l'effet du dégagement des chanfreins d'introduction des patins, et les plans inclinés formés par ces chanfreins permettent de venir placer à force les patins de part et d'autre de l'électrode lors de la translation des arbres. Le mécanisme assure ainsi une pression sur l'électrode qui se retrouve en prise entre les patins, de telle sorte que lorsque les patins translatent, ils forcent l'électrode à rotation par rapport au bras de pince qui lui reste fixe. On dégrippe ainsi l'électrode qui n'est plus fixée solidairement au bras. Avantageusement, un même mouvement de translation continu des patins a permis de réaliser deux fonctions distinctes de saisie de l'électrode puis de mise en rotation de celle-ci par rapport au bras qui reste fixe.

Le mouvement des arbres est prolongé jusqu'à ce qu'ils arrivent à une position d'extrémité, l'arbre principal dans sa position d'extrémité escamotée et l'arbre complémentaire dans sa position d'extrémité déployée. On contrôle pour cela la position de l'arbre principal en détectant le passage de la bague d'indexage devant le premier détecteur de présence de l'arbre principal. Comme cela a été décrit précédemment, l'arbre complémentaire est alors dans sa position d'extrémité déployée et l'on se retrouve dans la position illustrée figure 6. Dans cette position, l'électrode est toujours au contact des patins qui ne présentent qu'un chanfrein, et donc l'électrode est toujours en prise et elle ne peut pas tomber même si elle est déjà désolidarisée du bras de la pince.

L'arbre d'entraînement est alors entraîné en rotation dans le sens inverse des aiguilles d'une montre par l'ensemble moto-réducteur de sorte que le pignon d'entraînement monté en bout de l'arbre tourne également dans ce sens de rotation inverse. Il en résulte un déplacement en translation des arbres portant les crémaillères en prise avec le pignon, l'arbre principal étant cette fois entraîné en translation vers sa position d'extrémité déployée tandis que l'arbre complémentaire est entraîné en translation vers sa position d'extrémité escamotée.

Les déplacements en translation en sens opposés des deux arbres permettent de forcer à rotation l'électrode par rapport au bras de pince qui lui reste fixe et dans un sens de rotation inverse par rapport à celui décrit ci-dessus. On optimise ainsi le dégrippage de l'électrode en réalisant une rotation dans les deux sens par rapport au bras fixe, ce qui est particulièrement efficace puisque les électrodes étaient initialement emmanchées sur le bras et non vissées. On peut alors réaliser un mouvement de dégagement du bras de pince lors du retour des arbres vers la position d'origine, sans forcer sur celui-ci. A ce moment du retrait du bras de la pince, les patins serrent encore l'électrode et ils la maintiennent en position.

Lorsque les arbres arrivent dans leur position d'extrémité, c'est à dire leur position initiale au début de l'extraction de l'électrode, l'électrode est dégagée de l'étreinte des patins par le dégagement offert par le chanfrein d'introduction et elle tombe par simple gravité dans un bac de réception situé sous le poste d'extraction.

Immédiatement après ou après avoir chargé une électrode neuve sur le bras de la pince de soudage duquel vient d'être retirée l'électrode usagée, les bras de la pince sont articulés pour positionner l'autre électrode usagée de la pince à souder dans la position d'extraction. On observe qu'ici, la deuxième électrode arrive du côté opposé du dispositif d'extraction par rapport au côté où est arrivée la première électrode tel que cela est particulièrement visible en comparant les positions de l'électrode à extraire 13 sur la figure 9 et sur la figure 10. La position d'extraction est la même, en regard du capteur de détection de présence et au niveau des chanfreins d'introduction des patins, mais l'électrode est dans une position renversée à 180 degrés. Là encore, on détecte la présence de l'électrode dans cette position pour savoir si l'on peut débuter la procédure d'extraction. On procède ensuite au même mouvement des arbres pour dégripper l'électrode. Le fait que la position d'extraction reste la même permet de reproduire le même mouvement des arbres pour l'extraction, ainsi que la même détection de présence d'électrode par le capteur.

On va maintenant décrire le fonctionnement du poste de chargement d'électrodes.

Tel que cela a été précisé précédemment, on est ici dans un mode de réalisation avec un chargeur d'électrodes supérieures distinct d'un chargeur d'électrodes inférieures.

Les bras de pince sont amenés en regard du poste de chargement. La mâchoire que forme ces pinces est alors ouverte pour que le bras supérieur destiné à recevoir l'électrode supérieure se place au-dessus du chargeur supérieur.

On resserre ensuite la mâchoire de sorte que l'extrémité du bras supérieur vienne s'emmancher dans une des électrodes neuves. Le déplacement des bras l'un vers l'autre se poursuit pour les serrer l'un contre l'autre, de manière à forcer l'emmanchement du bras supérieur dans l'électrode et assurer la solidarisation de l'électrode neuve par rapport à son bras associé.

La pince peut ensuite être dégagée du poste de chargement. Dès que les deux opérations de chargement d'électrodes ont été effectuées (l'une pour l'électrode supérieure neuve, l'autre pour l'électrode inférieure neuve), le robot de soudage est alors opérationnel pour retourner sur les chaînes de montage.

On observe que dans ce mode de réalisation, pour une pince de soudage donnée, le chargement des électrodes neuves peut se faire intégralement après l'extraction des deux électrodes usagées ou bien le chargement des électrodes neuves peut se faire en deux étapes en alternance avec deux étapes d'extraction. Dans ce deuxième cas, on positionne le bras d'une pince dans le poste d'extraction pour retirer une électrode supérieure usagée puis on positionne ce même bras dans le poste de chargement pour emmancher une électrode neuve, puis on réalise le même demi-cycle pour l'autre bras de la pince.

Dans une variante, le poste de chargement comporte un carrousel et non plus des chargeurs linéaires. Le carrousel est disposé à proximité du dispositif d'extraction, d'un côté, comme on peut l'apercevoir dans la représentation schématique de la figure 1. Le carrousel est piloté en rotation pour placer en regard du bras présenté une électrode neuve, orientée correctement pour venir s'emmancher sur ce bras.

Avantageusement, et cela que ce soit dans le cas d'une distribution rotative ou d'un chargeur linéaire d'électrodes, on peut prévoir que les électrodes inférieures et supérieures soient disposés en série les unes au-dessous des autres. On dispose à cet effet des inserts qui permettent de superposer les électrodes, disposées alors en image miroir l'une par rapport à l'autre. Pour chaque déplacement du chargeur, linéaire ou rotatif, une électrode supérieure est au droit d'une électrode inférieure.

Ceci permet d'effectuer un chargement simultané des deux électrodes d'une pince. On approche à cet effet les bras de la pince de soudage et on referme la mâchoire formée par les bras. Le temps de cycle de remplacement est alors amélioré puisque aux avantages déjà constatés dans les procédés précédemment décrits, à savoir que les opérations d'extraction sont plus rapides et que l'on peut extraire préalablement les deux électrodes usagées au même endroit, successivement sans que le robot soit déplacé entre temps vers le poste de chargement, on rajoute ici l'avantage que le chargement des électrodes se fait de façon simultanée.

D'autres variantes non représentées peuvent être envisagées, une liste non exhaustive de certaines de ces variantes étant décrites ci-après.

La position escamotée et la position déployée des arbres peuvent être interverties, c'est-à-dire que dans la position initiale des arbres, l'arbre principal se trouve dans sa position d'extrémité escamotée et l'arbre complémentaire se trouve dans sa position d'extrémité déployée. On comprendra que les patins de chacun des arbres seront orientés différemment pour que les chanfreins d'introduction continuent à correspondre à la position d'extraction.

La forme des picots peut différer de celle décrite précédemment. A titre d'exemple, les picots peuvent prendre une forme de demi-sphères. Il importe ici que les picots dépassent toujours en saillie de la surface de contact pour empêcher le glissement possible de l'électrode lors de son entraînement par les patins. On comprend que si l'électrode venait à glisser contre les patins lors du déplacement en translation des arbres, cette électrode ne serait pas entraînée en rotation et ne pourrait être dégrippée du bras qui la supporte.

Le changeur d'électrodes peut comporter deux postes d'extraction avec le même système de bras entraînés en translation par un pignon d'entraînement. Ces deux postes d'extraction sont alors disposés l'un au-dessus de l'autre et l'un est dédié à l'extraction des électrodes des bras supérieurs tandis que l'autre est dédié à l'extraction des électrodes des bras inférieurs. On peut envisager dans ce cas que les pignons d'entraînement de chaque poste sont entraînés en rotation par le même arbre du moto-réducteur. On a ainsi une extraction simultanée rendue possible et on peut facilement orienter l'alignement en biais des picots pour un dégagement axial combiné au mouvement de rotation de l'électrode à extraire.

Également, la forme des patins peut être différente, avec deux chanfreins d'introduction pour chaque patin, entre la face avant et la surface de contact ainsi qu'entre cette surface de contact et la face arrière. Avec de tels patins, conformément au procédé d'extraction précédemment décrit, la translation de l'arbre principal de sa position d'extrémité déployée à sa position d'extrémité escamotée et la translation associée de l'arbre complémentaire force la rotation de l'électrode à extraire et son dégrippage par rapport au bras de pince qui reste fixe. Dans cette variante, à la fin de cette translation dans un premier sens, c'est à dire lorsque l'arbre principal est en butée contre la paroi arrière du boîtier, l'électrode se retrouve dégagée des surfaces de contact des patins, au niveau des deuxièmes chanfreins d'introduction. L'électrode peut alors être évacuée vers un bac de réception après retrait du bras. Les arbres restent dans cette position intermédiaire, avec l'arbre principal dans sa position d'extrémité escamotée et l'arbre complémentaire dans sa position d'extrémité déployée, et la deuxième électrode à extraire de la pince est insérée entre les deuxièmes chanfreins d'introduction dans la même position d'extraction. La translation des arbres dans le sens opposé permet alors l'extraction de l'électrode.

In ressort néanmoins de ce qui précède que l'invention n'est pas limitée aux modes de mise en oeuvre qui ont été spécifiquement décrits et représentés sur les figures.

## Revendications

1. Changeur d'électrodes de soudage dans lequel un poste d'extraction (12) d'électrodes usagées hors des bras (11) d'une pince à souder comporte deux patins (48, 50) présentant respectivement une surface de contact (64) disposée en regard de l'autre patin, ainsi que des moyens d'entraînement desdits patins, **caractérisé en ce que** chacun des deux patins (48, 50) est respectivement porté par un arbre à crémaillère (26, 28), lesdits arbres à crémaillère (26, 28) étant parallèles et entraînés par les moyens d'entraînement simultanément en translation axiale, l'un dans un premier sens et l'autre dans le sens opposé, de sorte que lesdits patins (48, 50) sont entraînés à se déplacer dans des mouvements de translation parallèles en sens opposés et à saisir ainsi entre eux une électrode à extraire (13), puis, dans la continuité du mouvement, à forcer à rotation l'électrode (13) en prise entre les patins (48, 50) par rapport au bras de pince (11).

2. Changeur d'électrodes selon la revendication 1, **caractérisé en ce que** les crémaillères (30, 32) des arbres à crémaillères (26, 28) sont entraînées en translation par la rotation d'un pignon (34) porté en bout d'un arbre motorisé (52), les crémaillères (30, 32) formant avec le pignon (34) et l'arbre motorisé (52), lesdits moyens d'entraînement des patins (48, 50), ledit pignon (34) étant positionné entre les deux crémaillères (30, 32), dans le plan contenant les axes de ces crémaillères (30, 32), et présentant une denture adaptée à coopérer avec les dents de chacune des crémaillères (30, 32), de sorte que la rotation du pignon (34) entraîne simultanément les deux crémaillères (30, 32) en sens opposés pour forcer la rotation de l'électrode (13) en prise entre les patins (48, 50).

3. Changeur d'électrodes selon la revendication 1 ou 2, **caractérisé en ce que** les patins (48, 50) présentent un chanfrein d'introduction (72) situé sur le côté du patin venant en regard de l'électrode à extraire (13) avant la saisie de l'électrode entre les patins (48, 50) et son entraînement en rotation par eux.

4. Changeur d'électrodes selon l'une des revendications 1 à 3, **caractérisé en ce que** ladite surface de contact (64) des patins (48, 50) présente des séries de picots (70) adaptés à permettre l'entraînement en rotation de l'électrode à extraire (13) sans phénomène de glissement entre les patins (48, 50) et l'électrode.

5. Changeur d'électrodes selon la revendication 4, **caractérisé en ce que** les picots (70) sont alignés par séries en biais par rapport à l'axe de déplacement en translation des patins (26, 28).

6. Changeur d'électrodes selon la revendication 2 et éventuellement l'une des revendications 3 à 5, **caractérisé en ce que** le poste d'extraction d'électrode comporte un boîtier (24) dans lequel sont logés ledit pignon (34) et lesdites crémaillères (30, 32), et qui comporte une paroi avant muni d'alésages (46) formant des moyens de guidage des arbres à crémaillère portant les patins (48, 50) et à travers lesquels passent lesdits arbres de telle sorte que les patins (48, 50) s'étendent hors du boîtier (24), les arbres étant translatés par l'entraînement du pignon (34) entre une position d'extrémité escamotée et une position d'extrémité déployée, et les arbres sont décalés longitudinalement de telle sorte que lorsqu'un arbre principal (26) est dans sa position d'extrémité déployée, l'arbre complémentaire (28) est dans sa position d'extrémité escamotée et qu'inversement, lorsque l'arbre principal (26) est dans sa position d'extrémité escamotée, l'arbre complémentaire (28) est dans sa position d'extrémité déployée, une position d'extraction pour insérer l'électrode à extraire (13) étant alors définie entre les patins (48, 50) lorsque les arbres (26, 28) sont chacun dans une position d'extrémité.

7. Changeur d'électrodes selon la revendication 6, **caractérisé en ce que** le boîtier (24) comporte en outre une paroi arrière (140) munie d'alésages (46) à travers lesquels passent lesdits arbres (26, 28) qui traversent le boîtier (24) de telle sorte que les crémaillères (30, 32) et le pignon (34) sont logés à l'intérieur du boîtier (24) alors que les patins (48, 50) s'étendent hors du boîtier (24) et que des moyens de contrôle (107, 109, 111, 160) du déplacement des arbres (26, 28) s'étendent hors du boîtier (24) à l'opposé des patins (48, 50).

8. Changeur d'électrodes selon la revendication 6, **caractérisé en ce que** les patins (48, 50) présentent un chanfrein d'introduction (72) qui prolonge verticalement une surface de contact (64) adaptée à être au contact de l'électrode à extraire (13), les patins (48, 50) étant montés sur les arbres (26, 28) de telle sorte que la surface chanfreinée du patin monté sur l'arbre principal (26) est disposée sur l'extrémité du patin tournée vers le boîtier (24) tandis que la surface chanfreinée du patin monté sur l'arbre complémentaire (28) est disposée sur l'extrémité opposée au boîtier (24).

9. Changeur d'électrodes selon l'une des revendications 6 à 8, **caractérisé en ce qu'**il comporte des moyens de détection de présence d'une électrode (74) dans la position d'extraction.

10. Changeur d'électrodes selon l'une des revendications 1 à 9, **caractérisé en ce que** les deux patins (48, 50) sont adaptés à recevoir entre eux soit une électrode supérieure, soit une électrode inférieure dans une position renversée à 180 degrés par rapport à la position de l'électrode supérieure, lesdits patins (48, 50) étant adaptés à se déplacer en translation dans des sens opposés pour forcer à rotation l'électrode en prise entre les patins de manière à séparer l'électrode, indifféremment l'électrode inférieure ou supérieure, du bras correspondant.

11. Changeur d'électrodes selon l'une des revendications précédentes, **caractérisé en ce qu'**il comporte en outre un poste de chargement (14) d'électrodes neuves en remplacement des électrodes usagées extraites dans le poste d'extraction (12).

12. Changeur d'électrodes selon la revendication 11, **caractérisé en ce que** le poste de chargement (14) comporte un chargeur d'électrodes inférieures (76) et un chargeur distinct d'électrodes supérieures (78), lesdits chargeurs étant portés par le bâti (16) du changeur d'électrodes et étant disposés respectivement de part et d'autre du poste d'extraction (12).

13. Changeur d'électrodes selon la revendication 12, **caractérisé en ce que** le poste de chargement (14) porte une série d'électrodes supérieures neuves au droit d'une série d'électrodes inférieures neuves, de sorte que les bras de la pince de soudage se serrent sur ces électrodes pour un chargement simultané d'une électrode inférieure et d'une électrode supérieure.

## Patentansprüche

1. Schweißelektrodenwechsler, bei dem eine Entnahmestation (12) für gebrauchte Elektroden außerhalb der Arme (11) einer Schweißzange zwei Kufen (48, 50) umfasst, die jeweils eine Kontaktfläche (64) aufweisen, die dem anderen Kufen gegenüberliegend angeordnet ist, sowie Antriebsmittel der Kufen, **dadurch gekennzeichnet, dass** jeder der zwei Kufen (48, 50) jeweils von einer Zahnstangenwelle (26, 28) gestützt wird, wobei die Zahnstangenwellen (26, 28) parallel sind und von den Antriebsmitteln gleichzeitig in axialer Verschiebung angetrieben werden, eine in eine erste Richtung, und die andere in die entgegengesetzte Richtung, so dass die Kufen (48, 50) angetrieben werden, sich durch parallele translatorische Bewegungen in entgegengesetzter Richtung zu verschieben und zwischen ihnen eine zu entnehmende Elektrode (13) zu greifen, und anschließend durch die bzw. bei der kontinuierliche(n) Bewegung die Elektrode (13) zur Rotation zu zwingen, die in Bezug auf den Zangenarm (11) zwischen den Kufen (48, 50) gehaltenen wird.

2. Elektrodenwechsler nach Anspruch 1, **dadurch gekennzeichnet, dass** die Zahnstangen (30, 32) der Zahnstangenwellen (26, 28) durch die Rotation eines Ritzels (34), das am Ende einer motorgetriebenen Welle (52) getragen wird, translatorisch angetrieben werden, wobei die Zahnstangen (30, 32) mit dem Ritzel (34) und der motorgetriebenen Welle (52) die Antriebsmittel der Kufen (48, 50) bilden, wobei das Ritzel (34) zwischen den beiden Zahnstangen (30, 32) in der Ebene positioniert ist, die die Achsen dieser Zahnstangen (30, 32) enthält und eine Verzahnung aufweist, die dazu angepasst ist, mit den Zähnen jeder einzelnen Zahnstange (30, 32) derart zusammenzuwirken, dass die Rotation des Ritzels (34) gleichzeitig die beiden Zahnstangen (30, 32) in entgegengesetzter Richtung antreibt, um die Rotation der zwischen den Kufen (48, 50) gehaltenen Elektrode (13) zu bewirken.

3. Elektrodenwechsler nach Anspruch 1 oder 2, **dadurch gekennzeichnet, dass** die Kufen (48, 50) eine Einführschräge (72) aufweisen, die auf der Seite des Kufens liegt, der der zu entnehmenden Elektrode (13) gegenüberliegt, bevor die Elektrode zwischen den Kufen (48, 50) gegriffen wird und durch diese in Drehung angetrieben wird.

4. Elektrodenwechsler nach einem der Ansprüche 1 bis 3, **dadurch gekennzeichnet, dass** die Kontaktfläche (64) der Kufen (48, 50) Reihen von Noppen (70) aufweist, die dazu angepasst sind, den Drehantrieb der zu entnehmenden Elektrode (13) ohne Gleitphänomen zwischen den Kufen (48, 50) und der Elektrode zu erlauben.

5. Elektrodenwechsler nach Anspruch 4, **dadurch gekennzeichnet, dass** die Noppen (70) in abgeschrägten Reihen in Bezug auf die Verschiebungsachse translatorischer Bewegung der Kufen (26, 28) ausgerichtet sind.

6. Elektrodenwechsler nach Anspruch 2 und gegebenenfalls nach einem der Ansprüche 3 bis 5, **dadurch gekennzeichnet, dass** die Elektroden-Entnahmestation ein Gehäuse (24) umfasst, in dem das Ritzel (34) und die Zahnstangen (30, 32) gelagert sind, und das eine Vorderwand mit Bohrungen (46) umfasst, die Führungsmittel für die Zahnstangenwellen bilden, die die Kufen (48, 50) tragen, und durch die die Wellen derart verlaufen, dass die Kufen (48, 50) sich außerhalb des Gehäuses (24) erstrecken, wobei die Wellen durch den Antrieb des Ritzels (34) zwischen einer eingezogenen Endposition und einer ausgefahrenen Endposition verschoben werden können, und die Wellen derart in Längsrichtung verschoben sind, dass, wenn sich eine Hauptwelle (26) in ihrer ausgefahrenen Endposition befindet, sich die Nebenwelle (28) in ihrer eingezogenen Endposition befindet, und umgekehrt, wenn sich die Hauptwelle (26) in ihrer eingezogenen Endposition befindet, sich die Nebenwelle (28) in ihrer ausgefahrenen Endposition befindet, wobei zwischen den Kufen (48, 50) eine Entnahmeposition zum Einlegen der zu entnehmenden Elektrode (13) bestimmt wird, wenn sich die Wellen (26, 28) jeweils in einer äußersten Endposition befinden.

7. Elektrodenwechsler nach Anspruch 6, **dadurch gekennzeichnet, dass** das Gehäuse (24) überdies eine Rückwand (140) mit Bohrungen (46) umfasst, durch die die Wellen (26, 28) verlaufen, die das Gehäuse (24) derart durchqueren, dass die Zahnstangen (30, 32) und das Ritzel (34) im Inneren des Gehäuses (24) untergebracht sind, während sich die Kufen (48, 50) außerhalb des Gehäuses (24) erstrecken, und sich die Kontrollmittel (107, 109, 111, 160) der Verschiebung der Wellen (26, 28) außerhalb des Gehäuses (24) den Kufen (48, 50) gegenüberliegend erstrecken.

8. Elektrodenwechsler nach Anspruch 6, **dadurch gekennzeichnet, dass** die Kufen (48, 50) eine Einführschräge (72) aufweisen, die vertikal eine Kontaktfläche (64) verlängert, die angepasst ist, mit der zu entnehmenden Elektrode (13) in Kontakt zu stehen, wobei die Kufen (48, 50) auf den Wellen (26, 28) derart montiert sind, dass die abgeschrägte Fläche des Kufens, die auf der Hauptwelle (26) montiert ist, an dem äußersten Ende des Kufens angeordnet ist, das dem Gehäuse (24) zugewandt ist, während die auf der Nebenwelle (28) montierte abgeschrägte Fläche an dem äußersten Ende des Kufens angeordnet ist, das dem Gehäuse (24) gegenüberliegt.

9. Elektrodenwechsler nach einem der Ansprüche 6 bis 8, **dadurch gekennzeichnet, dass** er Mittel zum Detektieren des Vorhandenseins einer Elektrode (74) in der Entnahmeposition umfasst.

10. Elektrodenwechsler nach einem der Ansprüche 1 bis 9, **dadurch gekennzeichnet, dass** die beiden Kufen (48, 50) angepasst sind, zwischen ihnen entweder eine obere Elektrode oder eine untere Elektrode in einer in Bezug auf die Position der oberen Elektrode um 180 Grad gedrehten Position aufzunehmen, wobei die Kufen (48, 50) angepasst sind, sich translatorisch in entgegengesetzte Richtungen zu verschieben, um eine Rotation der zwischen den Kufen gehaltenen Elektrode zu bewirken, so dass die Elektrode, unabhängig davon, ob es sich um die untere oder die obere Elektrode handelt, von dem entsprechenden Arm getrennt wird.

11. Elektrodenwechsler nach einem der vorhergehenden Ansprüche, **dadurch gekennzeichnet, dass** dieser als Ersatz für die gebrauchten Elektroden, die in der Entnahmestation (12) entnommen wurden, überdies eine Ladestation (14) für neue Elektroden umfasst.

12. Elektrodenwechsler nach Anspruch 11, **dadurch gekennzeichnet, dass** die Ladestation (14) eine Ladestation für untere Elektroden (76) und eine unterschiedliche Ladestation für obere Elektroden (78) umfasst, wobei die Ladestationen von der Grundplatte (16) des Elektrodenwechslers gehalten werden und jeweils beidseitig auf der Entnahmestation (12) angeordnet sind.

13. Elektrodenwechsler nach Anspruch 12, **dadurch gekennzeichnet, dass** die Ladestation (14) rechts von einer Reihe von neuen unteren Elektroden eine Reihe von neuen oberen Elektroden derart hält, dass die Arme der Schweißzange diese Elektroden für ein gleichzeitiges Laden einer unteren Elektrode und einer oberen Elektrode fest umschließen.

## Claims

1. Welding electrodes changer wherein an extraction station (12) intended to extract worn electrodes out of the arm (11) of welding tongs comprises two shoes (48, 50) having respectively a contact surface (64) facing to that of the other shoe, as well as driving means for said shoes, **characterized in that**
each of the two shoes (48, 50) is respectively carried by a rack shaft (26, 28), said rack shafts (26, 28) being parallel to each other and driven simultaneously for axial translation by the driving means, the one in a first direction and the other in the opposite direction, so that said shoes (48, 50) are driven to move in parallel with translation movements and opposite directions and to thereby grasp an electrode (13) to be extracted therebetween, then, in the movement continuity, to force the rotation of the electrode (13) engaged between the shoes (48,50) relatively to the tongs arm (11).

2. Electrodes changer according to claim 1, **characterized in that** the racks (30, 32) of the rack shafts (26, 28) are driven for translation by the rotation of a pinion (34) carried at the tip of a motorized shaft (52), the racks (30, 32) providing, with the pinion (34) and the motorized shaft (52), said driving means for the shoes (48, 50), said pinion (34) being positioned between the two racks (30, 32), within the plan containing the axis of these racks (30, 32), and having teeth adapted to cooperate with the teeth of each rack (30, 32), so that the rotation of the pinion (34) drives the two racks (30, 32) simultaneously in opposite directions to force the rotation of the electrode (13) engaged between the shoes (48, 50).

3. Electrodes changer according to claim 1 or 2, **characterized in that** the shoes (48, 50) have an introduction chamfer (72) located on the side of the shoe facing to the electrode to be extracted (13) before the grasp of the electrode between the shoes (48, 50) and its rotationally drive by them.

4. Electrodes changer according to one of claims 1 to 3, **characterized in that** said contact surface (64) of the shoes (48, 50) is provided with of series of barbs (70) adapted to allow the rotational drive of the electrode to be extracted (13) without slipping phenomenon between the shoes (48, 50) and the electrode.

5. Electrodes changer according to claim 4, **characterized in that** the barbs (70) are aligned per series and skewed relatively to the translation motion axis of the shoes (26, 28).

6. Electrodes changer according to claim 2 and possibly one of claims 3 to 5, **characterized in that** the electrode extraction station comprises a housing (24) in which are housed said pinion (34) and said racks (30, 32),
and which comprises a front wall provided with bores (46) providing guiding means for the rack shafts carrying the shoes (48,50) and through which are passed said shafts so that the shoes (48, 50) extend out of the housing (24), the shafts being moved in translation by the driving of pinion (34) between a retracted end position and a deployed end position, and the shafts are shifted longitudinally so that, when a main shaft (26) is in its deployed end position, the complementary shaft (28) is in its retracted end position and that conversely, when the main shaft (26) is in its retracted end position, the complementary shaft (28) is in its deployed end position, an extraction position intended to insert the electrode to be extracted (13) being then defined between the shoes (48, 50) when the shafts (26, 28) are each one in an end position.

7. Electrodes changer according to claim 6, **characterized in that** the housing (24) further includes a rear wall (140) provided with bores (46) through which are passed said shafts (26, 28) which cross the housing (24) so that the racks (30, 32) and the pinion (34) are located within the housing (24) whereas the shoes (48, 50) extend out of the housing (24) and that means (107, 109, 111, 160) intended to control the displacement of the shafts (26,28) extend out of the housing (24) at the opposite of the shoes (48, 50).

8. Electrodes changer according to claim 6, **characterized in that** the shoes (48, 50) are provided with an introduction chamfer (72) which vertically prolongs a contact surface (64) adapted to be in contact with the electrode to be extracted (13), the shoes (48, 50) being fitted on the shafts (26, 28) so that the chamfered surface of the shoe fitted on the main shaft (26) is arranged on the shoe end facing to the housing (24) while the chamfered surface of the shoe fitted on the complementary shaft (28) is arranged on the end that is opposed to the housing (24).

9. Electrodes changer according to one of claims 6 to 8, **characterized in that** it includes means to detect the presence of an electrode (74) in the extraction position.

10. Electrodes changer according to one of claims 1 to 9, **characterized in that** the two shoes (48, 50) are adapted to receive therebetween either an upper electrode or a lower electrode in a position inverted at 180 degrees relatively to the position of the upper electrode, said shoes (48, 50) being adapted to move in translation towards opposite directions to force the rotation of the electrode engaged between the shoes so as to separate the electrode, indifferently the lower or the upper electrode, from the corresponding arm.

11. Electrodes changer according to one of preceding claims, **characterized in that** it further includes a loading station (14) for new electrodes intended to replace the worn electrodes extracted within the extraction station (12).

12. Electrodes changer according to claim 11, **characterized in that** the loading station (14) includes a lower electrodes charger (76) and a separate upper electrodes charger (78), said chargers being carried by the frame (16) of the electrodes changer and being laid out respectively on both sides of the extraction station (12).

13. Electrodes changer according to claim 12, **characterized in that** the loading station (14) carries a series of new upper electrodes at the right of a series of new lower electrodes, so that the arms of the welding tongs are tightened on these electrodes in order to load simultaneously a lower electrode and an upper electrode.
